# EUROPEAN PATENT SPECIFICATION

(11) **EP 1 866 260 B1**
(45) Date of publication and mention of the grant of the patent: **07.05.2014**
(21) Application number: 06741362.5
(22) Date of filing: 24.03.2006
(51) Int. Cl.: C04B 28/14, C04B 24/38, C04B 22/06, C04B 18/08, E02D 5/80, E21D 20/02, C04B 40/06, C04B 28/06

(54) **DRY GROUT COMPOSITION AND CAPSULE FOR ANCHORING REINFORCING MEMBER, DOWEL OR ANCHOR ELEMENTS**
TROCKENE INJEKTIONSMASSE UND KAPSEL ZUR VERANKERUNG VON VERSTÄRKUNGSELEMENT, DÜBEL ODER ANKERELEMENTEN
COMPOSITION DE COULIS SEC ET CAPSULE D ANCRAGE POUR ELEMENT DE RENFORCEMENT, GOUJON OU ELEMENT D'ANCRAGE

(30) Priority: 24.03.2005 US 664698 P
(43) Date of publication of application: 19.12.2007
(73) Proprietor: Bertrand, Jacques, Baie D'Urfé, Québec H9X 3C6 (CA)
(72) Inventor: Bertrand, Jacques, Baie D'Urfé, Québec H9X 3C6 (CA)
(74) Representative: Regimbeau
(86) International application number: PCT/CA2006/000443
(87) International publication number: WO 2006/099742

(56) References cited:
- EP-A1- 0 005 969
- EP-A1- 0 033 246
- EP-A1- 1 312 590
- CA-A1- 1 179 984
- DE-U1- 29 701 606
- GB-A- 2 004 965
- US-A- 3 854 985
- DATABASE WPI Week 199719 Thomson Scientific, London, GB; AN 1997-203835 XP002665373, & CN 1 096 996 A (SERVICE DEPT FURONG MINING BUREAU YIBIN) 4 January 1995 (1995-01-04) & CN 1 096 996 A (SERVICE DEPARTMENT OF FURONG M [CN] SERVICE DEPT OF FURONG MINING [CN]) 4 January 1995 (1995-01-04)
- DATABASE WPI Week 200338 Thomson Scientific, London, GB; AN 2003-394172 XP002665374, & CN 1 396 138 A (WUDA JUCHENG REINFORCING IND CO LTD WUHA) 12 February 2003 (2003-02-12) & CN 1 396 138 A (WUDA JUCHENG REINFORCING INDUS [CN] WUHAN WUDA JUCHENG STRENGTHENI [CN) 12 February 2003 (2003-02-12)
- 'Ambex Anchoring Capsules - AAC: Cementitious Anchoring Capsule for Rebars and Dowels' AMBEX CONCRETE TECHNOLOGIES INC - TECHNICAL INFORMATION 07 July 2005, XP008137785
- CORPS OF ENGINEERS: 'Grout Materials' ENGINEERING MANUAL EM 1110-2-3506 20 January 1984, XP008137786
- NAUDTS ET AL.: 'Additives and Admixtures in Cement-Based Grouts' GEOTECHNICAL SPECIAL PUBLICATION no. 120 II, 2003, pages 1180 - 1191, XP008134779
- CORPS OF ENGINEERS: 'Tensioned Rock Bolts' ENGINEERING MANUAL EM 1110-1-2907 15 February 1980, XP008137787

## Description

### FIELD OF THE INVENTION

The invention relates to dry grout composition and capsule for anchoring reinforcing member, dowel or anchor elements in a hole of a substrate such as concrete, rock or soil.

### BACKGROUND OF THE INVENTION

Numerous materials are used to bond reinforcing or anchoring elements to existing substrate and include cementitious grouts with ordinary type 1* or high early type 3* (* ASTM C-150 designation) cements, calcium aluminate cements (CAC), synthetic resin based components grouts as well as epoxy based materials. The above mentioned grouts can be mixed on site prior to being poured in the drilled hole or they may be packaged in a pressure sensitive frangible cartridge or glass tube which will break upon introduction of the reinforcing or anchoring element.

Also, various mechanical anchoring devices are also used to anchor reinforcing and anchoring elements in the substrate. Each material and system has its own particularities and limitations.

One anchoring system that is being used is composed of a grout made with calcium aluminate cement (CAC) encapsulated in an unwoven polyester capsule that is used in the mines and construction projects. The rapid setting is achieved through the use of CAC which typically contain 36 to 42 % Al₂O₃ and has been used primarily in mines in South Africa where the in situ temperatures of the substrate can be as high as 50°C. CAC grouts are not accepted for structural applications in many countries principally in the UK and Europe.

EP 0005969 discloses an anchoring cartridge for use in anchoring an anchor element in a hole in a substrate by means of a self-setting composition comprising interactive solid and liquid components. The solid component is a hydraulically setting material such as hydraulic cement, for instance ordinary Portland cement, and the liquid component is water. Plasticizer is usually included in the solid component. A thixotropic agent may be used to reduce loss of self-setting of the composition. The composition may further comprise mineral fillers such as a fibrous material or an inert particular filler. In use, the composition sets within about 60 minutes.

Resin or epoxy based materials are not suitable for these applications as they will creep and deform with time and these materials are sensitive to humidity. Cartridges containing unsaturated polyester resin and epoxy systems exhibit high toxicity and flammability in an enclosed environment and disposing of excess materials and packaging material can be hazardous to the environment.

Mechanical anchors can provide an adequate solution to anchor reinforcing and anchoring elements in the substrate but they are installed at the end of the anchoring element in the drilled hole and leave it exposed to corrosion and can lead to failure over the long term especially in underground structures and in areas subjected to freeze-thaw conditions and in saline or acidic or corrosive environments. Normally the cavity between the wall of the drilled hole and the reinforcing or anchoring elements using mechanical anchors is grouted with a cementitious grout.

It is known that a number of cement clinkers contain up to 50-300 ppm of chromium (VI) compounds. Chromium (VI) compounds have a high water solubility and can therefore come in contact with the skin of workers during handling of wet mortar or concrete. A number of countries have now adopted regulations requiring cements with reduced amount of chromium (VI). Those chromium (VI) compounds are classified as extremely toxic because of their high oxidation potential as well as their ability to penetrate human tissue and potentially cause sensitization and allergic eczema (dermatitis).

There is therefore a great need for improved grouts, as well as improved handling processes and formulations.

### SUMMARY OF THE INVENTION

The invention provides an anchoring capsule for use in anchoring reinforcing member dowel, or anchor elements in a hole of a substrate, the capsule being as recited in claim 1.

In a further aspect there is provided a method for anchoring reinforcing member, dowel or anchor elements in a hole of a substrate. The method is as recited in claim 12.

### BRIEF DESCRIPTION OF THE DRAWINGS

The invention can be better described with reference to the following drawings, wherein:
Fig. 1 represents an anchoring capsule in accordance with one embodiment of the present invention;
Fig. 2 is a cross sectional view of Fig. 1;
Fig. 3 is a cross sectional view of a substrate with a drilled hole;
Fig. 4 is a cross sectional view of a substrate with a drilled hole and an anchoring capsule in accordance with one embodiment of the present invention;
Fig. 5 is the same view as Figs. 3 and 4 with a rebar introduced in the hole of the substrate.

### DETAILED DESCRIPTION OF THE INVENTION

The invention provides an anchoring capsule as recited in claim 1.

In one embodiment, the grout composition is further comprising an air entraining agent,

further comprising flyash, silica powder or a mixture thereof.

The grout composition comprises: a calcium aluminosulfate based hydraulic cement about 40% to about 50%
a mineral filler at about 45% to about 55%;
a thixotropic agent at about less than 1%;
a superplasticizer agent at about less than 2%; and
an air entraining agent at about less than 1%;
optionally flyash and/ or silica fume from trace amount to about 10%;
optionally an accelerating or retarding agent from trace amount to about 5%;
said amount being based upon the total dry weight of said composition for a total of 100%.

Advantageously, the grout composition may contain substantially less alumina than typically used by those in the field.

Therefore, in one embodiment:
the cement contains less that 60% of alumina;
the cement contains less that 50% of alumina;
the cement contains less that 40% of alumina;
the cement contains less that 30% of alumina;
the cement contains between about 10% and about 25% of alumina;
the cement contains between about 14% and about 16% of alumina;
the cement contains about 15% of alumina.

In further embodiments:
the grout composition contains from about 0.01% to less than about 1% thixotropic agent;
the grout composition contains from about 0.1% to less than about 1% thixotropic agent;
the grout composition contains less than about 0.1% thixotropic agent;
said amount being based upon the total dry weight of said composition for a total of 100%.

The thixotropic agent is a cellulose-based colloidal agent.

In one embodiment, the thixotropic agent is selected from cellulose or welan gum.

The grout composition contains from about 45% to about 55% mineral filler, in further embodiments,
the grout composition contains about 54% mineral filler; said amount being based upon the total dry weight of said composition for a total of 100%.

The mineral filler is sand.

The grout composition contains from about 40% to about 50% calcium aluminosulfate based hydraulic cement, in further embodiments,
the grout composition contains about 45% calcium aluminosulfate based hydraulic cement;
said amount being based upon the total dry weight of said composition for a total of 100%.

In one embodiment, the flyash is class F flyash and/or silica fume compliant with ASTM C 1240.

The superplasticizer agent is melamine sulfonate based plasticizer (Melment F-10 ®).

In further embodiments:
the grout composition contains from about 0.01% to less than about 2% superplasticizer;
the grout composition contains from about 0.1% to less than about 2% superplasticizer;
said amount being based upon the total dry weight of said composition for a total of 100%.

In further embodiments:
the grout composition contains from about 0.01% to less than about 1% air entraining agent;
the grout composition contains from about 0.1% to less about 1% air entraining agent;
said amount being based upon the total dry weight of said composition for a total of 100%.

In one embodiment, the air entraining agent is NVX resin.

In one embodiment, the dry grout composition is further comprising a chromium(VI)-reducing agent.

In one embodiment, the chromium(VI)-reducing agent is stannous sulfate or ferrous sulfate.

In one embodiment, the chromium(VI)-reducing agent is stannous sulfate.

In one embodiment, the chromium(VI)-reducing agent is ferrous sulfate.

In one embodiment, the grout composition contains from about 0.01% to about 100% of the chromium(VI)-reducing agent.

In one embodiment, the grout composition contains from about 0.01% to about 10% of the chromium(VI)-reducing agent.

In one embodiment, the grout composition contains from about 0.1% to about 1% of the chromium(VI)-reducing agent.

In one embodiment, the grout composition contains from about 0.1% to about 0.5% of the chromium(VI)-reducing agent.

In one embodiment, the grout composition contains from about 0.3% to about 0.35% of the chromium(VI)-reducing agent.

The term "thixotropic agent" means a substance that makes the hydrated grout composition become less fluid, stiffer and more cohesive when the dry grout is activated with water or any suitable aqueous solution. Typical thixotropic agent includes cellulose-based colloidal agent. A commercial agent is EUCO-NIVO P® manufactured by Euclid Admixture Canada inc. The thixotropic agent is added to obtain the thixotropic consistency required to ensure grout does not sag or run out of drilled hole. This characteristic is especially important for horizontal and overhead installation of anchoring elements.

The term "Flyash" means a finely divided mineral residue resulting from the combustion of ground or powdered coal in electric generating plant (ASTM C 618). Flyash consists of inorganic matter present in the coal that has been fused during coal combustion. Flyash is a pozzolanic material and has been classified into two classes, F and C, based on the chemical composition of the flyashes defined in ASTM C 618.

The term "ASTM" means American Society of Testing Materials.

The term "calcium aluminosulfate based hydraulic cement" refers to a cement composition formed by an expansive clinker which includes a stable calcium alumina-sulfate and a cement clinker or gypsum. The cement may be prepared based on methods known in the art and particularly using methods described in Canadian patent number CA 1 197 270. Typical cement preparation advantageously used in one embodiment of the invention is Rapid Set@ cement by CTS Cement which is included in the premixed Cement All® grout manufactured by CTS Cement which contains appropriate amounts of a superplasticizer agent, an air entraining agent and mineral filler. Those skilled workmen in the field will readily understand that the specific amount of water used may vary depending on the chemical composition of different batches. However it is possible to adjust the other elements of the composition to practice the invention.

The term "water permeable encapsulating means" will be understood to be any suitable container allowing for containing the dry grout composition and allowing an aqueous solution (including water) to penetrate within the container to soak the dry grout composition as defined herein. The suitable container should be selected to maintain its physical integrity and as such substantially retain the dry and wet composition during manipulation and further have the ability of being ruptured in the hole of a substrate by the introduction of a reinforcing member, dowel or anchor elements and be integrated into the mix. The container may be made of unwoven polyester wrapping, polymer, paper or a combination of same.

The term "alumina" means an aluminum compound of formula Al₂O₃.

The term "wetting" or "wet" means providing water or any suitable aqueous solution in contact with the grout composition to obtain an effective water/cement ratio. A water/cement ratio provided by the soaking operation or otherwise is selected to provide the desired consistency to the wet composition. Generally, it is desirable to have the lowest water/cement ratio. A typical ratio will be from about 0.25 to about 0.5. Alternatively, it may be of from about 0.26 to about 0.45.

The expression "reinforcing member, dowel or anchor elements" is well known to the skilled workman and should not be construed as limited by the enumeration. In general, elements to be anchored in a hole of a substrate may also be referred to as load transferring element, reinforcing steel, rebar threaded bolt, dowel, anchor bolt or rock bolt.

The expression "chromium(VI)-reducing agent" means a transition metal salt having the ability to reduce a chromium(VI) species into chromium(III). Such reducing agents include without limitation stannous sulfate or ferrous sulfate as well as their hydrates and /or solvates such as ferrous sulfate mono- or hepta-hydrate. The amount of reducing agent required can be determined by measuring the chromium (VI) content in a cement using techniques known in the art and adding the appropriate amount of reducing agent. The amount % used herein was based upon the total dry weight of the dry grout composition (i.e. cement, filler, thixotropic agent and if any superplasticizer agent, air entraining agent and flyash and/or silica fume.

As used herein, the term "air entraining agent " refers to agents known in the art of concrete and cause a substantial improvement in durability and none of the essential properties of the concrete should be seriously impaired. Requirements and specifications of air-entraining agents to be used in concrete are covered in ASTM C 260 and AASHTO M 154. Four groups of air entraining agents are generally identified: 1) salts of wood resins, 2) synthetic detergents, 3) salts of petroleum acids, and 4) fatty and resinous acids and their salts.

As used herein, the term "superplasticizers" refers to agents known in the art of concrete that fluidifies the mix before it hardens, increasing its workability, reducing the water/ cement ratio and are usually not intended to affect the properties of the final product after it hardens. Superplasticizers are commonly manufactured from lignosulfonates, sulfonated naphthalene formaldehyde, sulfonated melamine formaldehyde, or polycarboxylic ethers.

As used herein, the term "silica fume" refers to very fine pozzolanic material, composed mostly of amourphous silica produced by electric arc furnaces as a byproduct of the production of elemental silicon or ferrosilicon alloys (also known as condensed silica fume and microsilica). Requirements and specifications of silica fume to be used are covered in ASTM C 1240.

Also it is possible to determine the time for strength development as this will determine how soon the anchoring element can accept a load and also how much it can accept.

One criteria in designing an anchoring grout is the bond strength developed to resist pull out. The design limit to be obtained must be the load at the elastic limit of the reinforcing or anchoring element so as to ensure that it is the reinforcing or anchor element that yields and becomes the weak point in the anchoring system. The bond strength developed by the anchoring grout must therefore be greater than the elastic limit of the reinforcing or anchoring element. To achieve this, the anchoring grout must not shrink and completely fill the drilled hole once the reinforcing or anchoring element is introduced and encapsulate it. Thus it is important to have a stiff and homogeneous thixotropic non-shrink grout mix to ensure the grout does not substantially run out of the drilled hole.

In one aspect of the invention, there is provided an anchoring capsule for use in anchoring a reinforcing member, dowel or anchor elements in a hole of a substrate, the capsule comprising:
a water permeable encapsulating means; and
a dry grout composition as defined herein,
said grout composition being encapsulated within said encapsulating means.

The encapsulating means is made of polyester.

In one embodiment, the encapsulating means is made of unwoven polyester.

Typically, the anchoring capsule is prepared by pre-mixing all of the desired components of the dry grout composition and adding into the encapsulating means. The encapsulating means may have various shapes and sizes such as a sleeve, a pouch or any convenient shape. The dry grout composition may be added to the encapsulating means manually, automatically or in part manually and automatically using dry material filling apparatus.

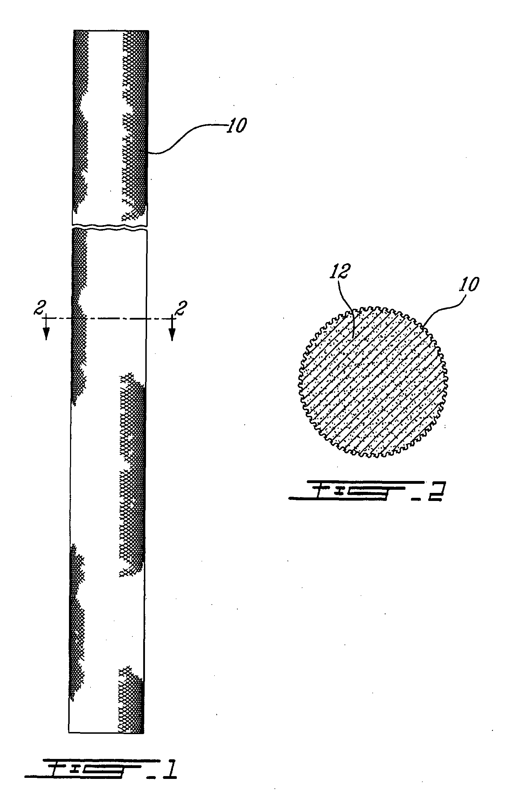

Fig. 1 represents one embodiment of the present invention in which **10** is an elongated unwoven polyester encapsulating means. Fig. 2 shows a cross sectional view of the representation of Fig. 1, with a dry grout composition **12** encapsulated within **10.**

In one aspect of the invention, there is provided a method for anchoring reinforcing member, dowel or anchor elements in a hole of a substrate comprising:
providing an anchoring capsule as defined herein;
soaking said capsule in an aqueous solution,
introducing said capsule in the hole; and
introducing the reinforcing member, dowel or anchor elements in the capsule before any substantial hardening has occurred.

In one embodiment, the ratio of aqueous solution to cement is from about 0.25 to about 0.5.

In one embodiment, the ratio of aqueous solution to cement is about 0.45.

In one embodiment, the ratio of aqueous solution to cement is about 0.4.

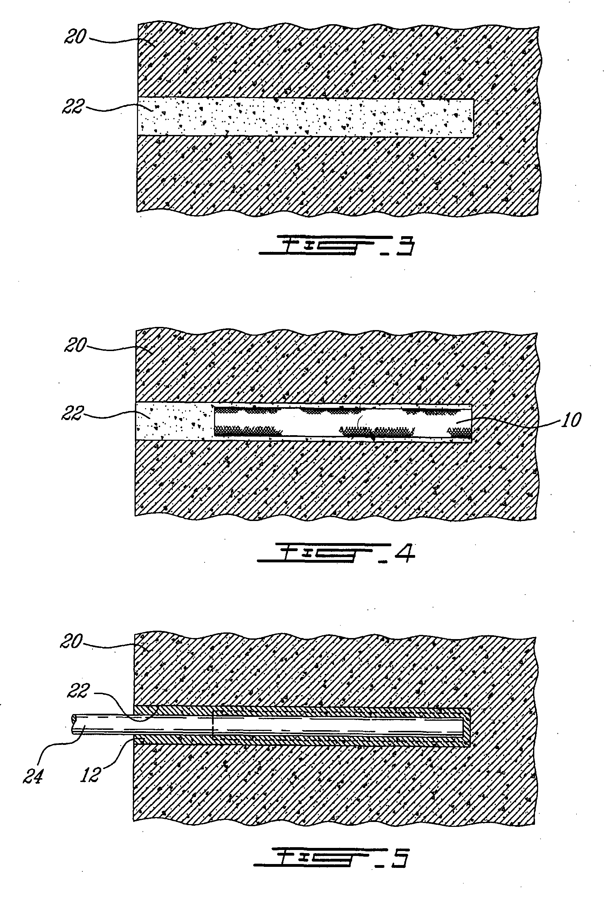

In accordance with one embodiment of the invention, Fig. 3 shows a substrate **20** that is a concrete block in which a hole **22** was prepared. As shown in Fig. 4, an anchoring capsule **10** (that has been soaked in water) is introduced within the hole **22.** In Fig. 5, a rebar **24** is introduced within hole **22** causing the anchoring capsule to rupture and therefore release the wetted dry grout composition **12** to fill the hole as required (i.e. partly or completely).

Advantageously, the method for anchoring reinforcing member, dowel or anchor elements of the invention does not require rotation upon introducing the reinforcing member, dowel or anchor elements in the capsule.

The following examples are provided as illustration of some embodiments in accordance with the present invention.

### Example 1

### Dry grout composition

A dry grout composition was prepared using the following ingredients and their relative proportion:
- calcium aluminosulfate based hydraulic cement Rapid Set Cement® by CTS Cement : 11.25 kg (approximately 45%)
- mineral filler (sand): 13.75 kg (approximately 54%)
- thixotropic agent: EUCO-NIVO-P® obtained from Euclid Admixture Canada Inc. in proportion of 25g/25 kg Cement All® (approximately 0. 1%)
the amount % being based upon the total dry weight of the cement and filler.

### Example 2

### Compressive strength, shrinkage and pull out tests

Basic tests for compressive strength, shrinkage and pull out tests were performed in laboratory. Additional mineral fillers were added in different dosages and the amount of bleeding was observed. Tests were conducted on the grout before encapsulation in an unwoven polyester capsule and the tests were repeated with the grout inserted in the unwoven polyester capsule having a size of 19mm X 300mm. The calcium aluminosulfate based hydraulic cement capsules were activated by simply immersing capsules in water at 20°C. A water/cement ratio of 0.40 was used.

The tests results for the capsule containing the grout composition of example 1 are as follows in Table 1:

**Table 1**

| Compressive strength | | |
|---|---|---|
| ASTM C-109 | 20°C | - 1°C |
| 4 hours | -- | 17.9 MPa |
| 24 hours | 27.2 MPa | 21.1 MPa |
| 7 days | 30.5 MPa | 31.9 MPa |
| | | |

| Expansion/Shrinkage | | |
|---|---|---|
| ASTM C-157 | | |
| 28 days | +0.027% | |
| ASTM C-1090 | | |
| 28 days | +0.01% | |
| | | |

| Setting time | | |
|---|---|---|
| ASTM C-403 | | |
| Initial setting time | 17 min | |
| Final setting time | 21 min | |
| | | |

| Freeze-thaw durability | | |
|---|---|---|
| ASTM C-666 | | |
| 300 cycles | | |
| Dynamic modulus | 100% | |
| | | |

| Slant shear test | | |
|---|---|---|
| ASTM C-882 Mod | | |
| 1 day | 9.7 MPa | |
| 28 day | 17.9 MPa | |

### Example 3

### Pullout tests with 600 MPa reinforcing steel

Pullout tests were performed using the capsule containing the grout composition of example 1.

A concrete block of 52.5 MPa was cast and reinforcing steel rebar (600 MPa) were installed in the drilled holes. Pullout tests using a hollow center hydraulic jack were performed and results are presented below in Table 2:

**Table 2**

| Bar dia. mm | Hole length mm | Age | Pull out ASTM E-488 kN | 600 Mpa steel Elastic limit steel kN |
|---|---|---|---|---|
| 16 M | 300 | 4.5 hrs | 110.3 | 121 |
| 16 M | 300 | 24 hrs | 135.4* | 121 |
| 16 M | 300 | 7 days | 144.7* | 121 |
| 16 M | 300 | 28 days | 151.4* | 121 |
| 16 M | 400 | 28 days | 147.8** | 121 |
| 20 M | 300 | 5 hrs | 130.8 | 188 |
| 20 M | 300 | 24 hrs | 177.1 | 188 |
| 20 M | 300 | 7 days | 202.2* | 188 |
| 20 M | 300 | 28 days | 212.7* | 188 |

| | | | | |
|---|---|---|---|---|
| * Maximum value obtained at constant load before load decreased due to bar deformation. ** Load applied continually until rebar failed after 45 mm elongation. | | | | |

The purpose of the pull out test is to ensure that anchoring grout can develop adequate bond between substrate and the anchoring grout as well as between the reinforcing element and the anchoring grout.

### Example 4

### Pullout tests with 400 MPa reinforcing steel

Pullout tests were performed using the capsule containing the grout composition of example 1.

A concrete block of 62.7 MPa was cast and reinforcing steel rebar (400 MPa) were installed in the drilled holes. Pullout tests using a hollow center hydraulic jack were performed and results are presented below in Table 3:

**Table 3**

| Bar dia. mm | Hole length mm | Age | Pull out ASTM E-488 kN | 400 MPa steel Elastic limit steel kN |
|---|---|---|---|---|
| 15 M | 300 | 4 hrs | 85.5* | 80 |
| 15 M | 300 | 24 hrs | 108.9* | 80 |
| 15 M | 300 | 7 days | 43.1* # | 80 |
| 15 M | 300 | 28 days | 143.2* # | 80 |

| | | | | |
|---|---|---|---|---|
| * Maximum value obtained at constant load before load decreased due to bar deformation. # Rebar failed. | | | | |

The purpose of the pull out test is to evaluate whether the anchoring grout has developed adequate bond between substrate and the anchoring grout as well as between the reinforcing element and the anchoring grout.

### Example 5

### Modified dry grout compositions

Modified dry grout compositions were prepared by the addition of stannous sulfate or iron sulfate as reducing agent to the composition of Example 1. Table 4 illustrates entries A to K. Entry A is Cement All@ by CTS Cement, entries B1, B2 and H are batches of a grout as described in example 1, entries C to G were prepared by the addition of stannous sulfate, in proportions indicated in their respective entry, to the composition of example 1. Entries I to K were prepared by the addition of ferrous sulfate, in proportions indicated in their respective entry, to the composition of Example 1.

The concentration of hexavalent chromium Cr(VI) was evaluated using an alkaline digestion (as described in EPA 3060A in STDM 20th Edition), followed by spectrophotometry analysis as described in method SM 3500-Cr B (STDM 20^{th} Edition) or EPA 7196 using a Varian Carry 50 spectrophotometer.
STDM = Standard methods for the examination of water and waste water 20^{th} Edition

The amount % being based upon the total dry weight of the dry grout composition (i.e. cement, filler, thixotropic agent and if any superplasticizer agent, air entraining agent and flyash and/or silica fume);

**Table 4**

| **Entry** | **Reducing agent (amt %)** | **Cr(VI) (ppm)** | **Entry** | **Reducing agent (amt %)** | **Cr (VI) (ppm)** |
|---|---|---|---|---|---|
| A | -- | 21 | F | Stannous sulfate (0.5) | ND |
| B1 (20°C) | -- | 55 | G | Stannous sulfate (1.0) | ND |
| B2 | -- | 27 | H | - | 55 |
| C | Stannous sulfate (0.1) | 19 | I | Iron sulfate (0.6) | 20 |
| D | Stannous sulfate (0.2) | 15 | J | Iron sulfate (0.8) | 17 |
| E | Stannous sulfate (0.3) | 3,9 | K | Iron sulfate (1.0) | 16 |

| | | | | | |
|---|---|---|---|---|---|
| ND: undetectable | | | | | |

### Example 6

### Modified dry grout compositions pull-out and compression tests

The tests in Table 5 were conducted using the grouts described in the table below that are contained in capsules of unwoven polyester of 13mm X 200mm. The composition of grouts in Table 5 are identical as those described in Example 5. The reinforcing steel rebar size was 15 mm diameter having a *F'*y of 400MPa. A hole was drilled in concrete at a depth of 200mm and diameter of 19mm. The pull out test was conducted at 10°C and the compression test at 20°C
The compression test was conducted under standard ASTM C-109 and the pull out test under ASTM E-488.

**Table 5**

| **Entry** | **compressive strenght 7 days (MPa) ASTM C-109** | **pull out 4 hrs (KN)** | **pull cut 6 hrs (KN)** | **pull out 1 day (KN)** | **pull out 3 days (KN)** | **pull out 7 days (KN)** | **pull out 28 days (KN)** |
|---|---|---|---|---|---|---|---|
| A | 45,5 | -- | -- | 92, 44 | -- | -- | -- |
| B1 (20°C) | -- | 78,8 | -- | 86,17 | -- | 102,89 | 109,16 |
| B2 | -- | -- | -- | 89, 66 | -- | 89,3 | -- |
| C | -- | -- | -- | -- | -- | -- | -- |
| D | -- | -- | -- | -- | -- | -- | -- |
| E | 38,3 | 0 | 39,71 | 93,84 | 94,53 | 91,14 | -- |
| F | -- | -- | -- | -- | -- | -- | -- |
| G | -- | -- | -- | -- | -- | -- | -- |
| H | -- | -- | -- | -- | -- | -- | -- |
| I | 37,4 | -- | -- | -- | -- | -- | -- |
| J | 38,2 | -- | -- | -- | -- | -- | -- |
| K | 36,9 | -- | -- | -- | -- | -- | -- |

### Example 7

### Modified dry grout compositions pull-out tests

The composition of grouts in Table 6 are identical as those described in Example 5, the tests were conducted under same conditions as described in Example 6 with the exception that the temperature was 20°C.

**Table 6**

| **Entry** | **pull out 4 hrs (KN)** | **pull out 6 hrs (KN)** | **pull out 1 day (KN)** | **pull out 3 days (KN)** | **pull out 7 days (KN)** | **pull out 28 days (KN)** |
|---|---|---|---|---|---|---|
| A | -- | -- | 94, 81 | -- | -- | -- |
| B1 (20°C) | 78,8 | -- | 86,17 | -- | 102,89 | 109,16 |
| B2 | -- | -- | 85, 63 | -- | -- | -- |
| C | -- | -- | -- | -- | -- | -- |
| D | -- | -- | -- | -- | -- | -- |
| E | 0 | 52,57 | 92, 97 | 102,16 | 100,32 | -- |
| F | -- | -- | -- | -- | -- | -- |
| G | -- | -- | -- | -- | -- | -- |
| H | -- | -- | -- | -- | -- | -- |
| I | -- | -- | -- | -- | -- | -- |
| J | -- | -- | -- | -- | -- | -- |
| K | -- | -- | -- | -- | -- | -- |

### Example 8

### Modified dry grout compositions pull-out tests.

The composition of grouts in entries A, B and E in Table 7 are identical as those described in Example 5 (Table 4), the pull-out tests were conducted under same conditions as those described in Example 6 using same steel reinforcing rebar, hole and capsule sizes. Tests were repeated in various holes at various time points as shown in Table 7 below at 10°C.

**Table 7**

| **Entry** | **Hole** | | **Pull-out** | | **Average** |
|---|---|---|---|---|---|
| | **Hole** | **Cure time (days)** | **reading** | **KN.** | |
| A | 1 | 24 hrs | 5000 | 96,62 | 92,44 |
| | 2 | 24 hrs | 4600 | 88,26 | |
| | 3 | 24 hrs | 4800 | 92,44 | |
| | 4 | 7 | -- | -- | -- |
| | 5 | 7 | -- | -- | |
| | 6 | 7 | -- | -- | |
| | 7 | 28 | -- | -- | -- |
| | 8 | 28 | -- | -- | |
| | 9 | 28 | -- | -- | |
| B | 1 | 24 hrs | 4400 | 84,08 | 89,66 |
| | 2 | 24 hrs | 4600 | 88,26 | |
| | 3 | 24 hrs | 5000 | 96,62 | |
| | 4 | 7 | 1600 | 91,14 | 89,30 |
| | 5 | 7 | 1700 | 96, 65 | |
| | 6 | 7 | 1400 | 80,12 | |
| | 7 | 28 | -- | -- | -- |
| | 8 | 28 | -- | -- | |
| | 9 | 28 | -- | -- | |
| | | | | | |
| E | 1 | 4 hrs | 0 | 0,00 | 0,00 |
| | 2 | 4 hrs | 0 | 0,00 | |
| | 3 | 4 hrs | 0 | 0,00 | |
| | 4 | 6 hrs | 600 | 36,04 | 39,71 |
| | 5 | 6 hrs | 800 | 47,06 | |
| | 6 | 6 hrs | 600 | 36,04 | |
| | 7 | 24 hrs | 5000 | 96,62 | 93,84 |
| | 8 | 24 hrs | 4800 | 92,44 | |
| | 9 | 24 hrs | 4800 | 92,44 | |
| | 10 | 3 | 4800 | 92,44 | 94,53 |
| | 11 | 3 | 5000 | 96,62 | |
| | 12 | 7 | 1500 | 85,63 | 91,14 |
| | 13 | 7 | 1600 | 91,14 | |
| | 14 | 7 | 1700 | 96,65 | |
| | 15 | 28 | -- | -- | -- |
| | 16 | 28 | -- | -- | |
| | 17 | 28 | -- | -- | |

### Example 9

### Modified dry grout composition pull-out tests.

The composition of grouts in entries A, B and E in Table 8 are identical as those described in Example 5 (Table 4), the pull-out tests were conducted under same conditions as those described in Example 6 using same steel reinforcing rebar, hole and capsule size. Tests were repeated in various holes at various time points as shown in Table 8 at 20°C.

**Table 8**

| **Entry** | **Hole** | | **Pull-out** | | **Average** |
|---|---|---|---|---|---|
| | **Hole** | **Cure time (days)** | **reading** | **KN.** | |
| A | 1 | 24 hrs | 1700 | 96,65 | 94, 81 |
| | 2 | 24 hrs | 1700 | 96,65 | |
| | 3 | 24 hrs | 1600 | 91,14 | |
| | 4 | 7 | -- | -- | -- |
| | 5 | 7 | -- | -- | |
| | 6 | 7 | -- | -- | |
| | 7 | 28 | -- | -- | -- |
| | 8 | 28 | -- | -- | |
| | 9 | 28 | -- | -- | |
| B | 1 | 24 hrs | 1400 | 80,12 | 85,63 |
| | 2 | 24 hrs | 1400 | 80,12 | |
| | 3 | 24 hrs | 1700 | 96,65 | |
| | 4 | 7 | -- | -- | -- |
| | 5 | 7 | -- | -- | |
| | 6 | 7 | -- | -- | |
| | 7 | 28 | -- | -- | -- |
| | 8 | 28 | -- | -- | |
| | 9 | 28 | -- | -- | |
| | | | | | |
| E | 1 | 4 hrs | 0 | 0,00 | 0,00 |
| | 2 | 4 hrs | 0 | 0,00 | |
| | 3 | 6 hrs | 900 | 52,57 | 52,5 |
| | 4 | 6 hrs | 900 | 52,57 | 7 |
| | 5 | 6 hrs | 900 | 52,57 | |
| | 6 | 24 hrs | 1700 | 96,65 | 89,3 0 |
| | 7 | 24 hrs | 1400 | 80,12 | |
| | 8 | 24 hrs | 1600 | 91,14 | |
| | 9 | 3 | 1900 | 107,67 | 102, 16 |
| | 10 | 3 | 1700 | 96,65 | |
| | 11 | 7 | 1700 | 96,65 | 100, 32 |
| | 12 | 7 | 1900 | 107,67 | |
| | 13 | 7 | 1700 | 96,65 | |
| | 14 | 28 | -- | -- | -- |
| | 15 | 28 | -- | -- | |
| | 16 | 28 | -- | -- | |

## Claims

1. An anchoring capsule for use in anchoring a reinforcing member, dowel or anchor elements in a hole of a substrate, the capsule comprising:
• a water permeable encapsulating means wherein the encapsulating means is made of polyester; and
• a dry grout composition comprising:
- about 40% to about 50% of a calcium aluminosulfate based hydraulic cement;
- about 45% to about 55% mineral filler which is sand ;
- less than about 1% of a thixotropic agent which is a cellulose-based colloidal agent;
- less than about 2% of a melamine sulfonate based ,superplasticizer agent; and
- less than about 1% of an air entraining agent;
said amounts being based upon the total dry weight of said composition for a total of 100%,
said dry grout composition being encapsulated within said encapsulating means.

2. The anchoring capsule as defined in claim 1, wherein the cement contains less than 30% of alumina.

3. The anchoring capsule as defined in claim 1, wherein the cement contains between about 10% and about 25% of alumina.

4. The anchoring capsule as defined in claim 1, wherein the cement contains less than about 15% of alumina.

5. The anchoring capsule as defined in any one of claims 1 to 5, wherein the grout composition contains less than about 0.1% thixotropic agent.

6. The anchoring capsule as defined in any one of claims 1 to 5, wherein the grout composition is further comprising class F flyash and/or silica fume compliant with ASTM C 1240.

7. The anchoring capsule as defined in any one of claims 1 to 6, wherein the grout composition contains about 1% of the superplasticizer.

8. The anchoring capsule as defined in any one of claims 1 to 7 further comprising a chromium(VI)-reducing agent which is stannous sulfate or ferrous sulfate.

9. The anchoring capsule as defined in claim 8 wherein said chromium(VI)-reducing agent is stannous sulfate.

10. The anchoring capsule as defined in claim 8 wherein said chromium(VI)-reducing agent is ferrous sulfate.

11. The anchoring capsule as defined in any one of claims 1 to 10, wherein the polyester is unwoven polyester.

12. A method for anchoring reinforcing member, dowel or anchor elements in a hole of a substrate comprising:
• providing an anchoring capsule as defined in any one of claims 1 to 11;
• soaking said capsule in an aqueous solution;
• introducing said capsule in the hole; and
• introducing a reinforcing member, dowel or anchor elements in the capsule before any substantial hardening has occurred.

13. The method as defined in claim 12, wherein the ratio of aqueous solution to cement is from about 0.25 to about 0.5.

14. The method as defined in claim 12, wherein the ratio of aqueous solution to cement is about 0.4.

## Patentansprüche

1. Verankerungskapsel zur Verwendung bei der Verankerung eines Verstärkungselements, Dübels oder Ankerelements in einem Loch in einem Untergrund, wobei die Kapsel aufweist:
• eine wasserdurchlässige Verkapselungseinrichtung, wobei die Verkapselungseinrichtung aus Polyester besteht; und
• eine trockene Fugenmasse, die aufweist:
- etwa 40 % bis etwa 50 % auf Calciumaluminosulfat basierenden wasserbindenden Zement;
- etwa 45 % bis etwa 55 % mineralischen Füllstoff, bei dem es sich um Sand handelt;
- weniger als etwa 1% thixotropen Stoff, bei dem es sich um ein auf Cellulose basierendes Kolloid handelt;
- weniger als etwa 2 % auf Melaminsulfonat basierenden Superweichmacher; und
- weniger als etwa 1% Luftporenbildner;
wobei diese Mengenangaben auf dem Gesamttrockengewicht der Zusammensetzung von insgesamt 100 % beruhen,
wobei die Fugenmasse in der Verkapselungseinrichtung eingekapselt ist.

2. Verankerungskapsel nach Anspruch 1, wobei der Zement zu weniger als 30 % aus Aluminiumoxid besteht.

3. Verankerungskapsel nach Anspruch 1, wobei der Zement zu zwischen etwa 10 % und etwa 25 % aus Aluminiumoxid besteht.

4. Verankerungskapsel nach Anspruch 1, wobei der Zement zu weniger als etwa 15 % aus Aluminiumoxid besteht.

5. Verankerungskapsel nach einem der Ansprüche 1 bis 5, wobei die Fugenmasse zu weniger als etwa 0,1 % aus thixotroper Substanz besteht.

6. Verankerungskapsel nach einem der Ansprüche 1 bis 5, wobei die Fugenmasse ferner Flugasche der Klasse F und/oder Silicastaub, der ASTM C 1240 genügt, enthält.

7. Verankerungskapsel nach einem der Ansprüche 1 bis 6, wobei die Fugenmasse zu etwa 1% aus dem Superweichmacher besteht.

8. Verankerungskapsel nach einem der Ansprüche 1 bis 7, ferner ein Chrom(VI)-Reduktionsmittel aufweisend, bei dem es sich um Zinnsulfat oder Eisensulfat handelt.

9. Verankerungskapsel nach Anspruch 8, wobei das Chrom(VI)-Reduktionsmittel Zinnsulfat ist.

10. Verankerungskapsel nach Anspruch 8, wobei das Chrom(VI)-Reduktionsmittel Eisensulfat ist.

11. Verankerungskapsel nach einem der Ansprüche 1 bis 10, wobei der Polyester ein ungewebtes Polyester ist.

12. Verfahren zum Verankern eines Verstärkungselements, Dübels oder Ankerelements in einem Loch in einem Untergrund, umfassend:
• Bereitstellen einer Verankerungskapsel nach einem der Ansprüche 1 bis 11;
• Einweichen der Kapsel in einer wässrigen Lösung;
• Einbringen der Kapsel in das Loch; und
• Einbringen eines Verstärkungselements, Dübels oder Ankerelements in die Kapsel, bevor es zu einer nennenswerten Härtung kommt.

13. Verfahren nach Anspruch 12, wobei das Verhältnis von wässriger Lösung zu Zement bei etwa 0,25 bis etwa 0,5 liegt.

14. Verfahren nach Anspruch 12, wobei das Verhältnis von wässriger Lösung zu Zement bei etwa 0,4 liegt.

## Revendications

1. Capsule d'ancrage pour une utilisation dans l'ancrage d'un élément de renforcement, d'un goujon ou d'éléments d'ancrage dans un trou d'un substrat, la capsule comprenant :
• un moyen d'encapsulation perméable à l'eau, dans lequel le moyen d'encapsulation est fait de polyester ; et
• une composition de coulis sec, comprenant :
- environ 40 % à environ 50 % d'un ciment hydraulique à base d'aminosulfate de calcium ;
- environ 45 % à environ 55 % d'une charge minérale qui est du sable ;
- moins d'environ 1 % d'un agent thixotrope qui est un agent colloïdal à base de cellulose ;
- moins d'environ 2 % d'un agent superplastifiant à base de sulfonate de mélamine ; et
- moins d'environ 1 % d'un agent d'entraînement d'air ;
lesdites quantités étant basées sur le poids sec total de ladite composition pour un total de 100 %,
ladite composition de coulis sec étant encapsulée dans ledit moyen d'encapsulation.

2. Capsule d'ancrage telle que définie dans la revendication 1, dans laquelle le ciment contient moins de 30 % d'alumine.

3. Capsule d'ancrage telle que définie dans la revendication 1, dans laquelle le ciment contient entre environ 10 % et environ 25 % d'alumine.

4. Capsule d'ancrage telle que définie dans la revendication 1, dans laquelle le ciment contient moins d'environ 15 % d'alumine.

5. Capsule d'ancrage telle que définie dans l'une quelconque des revendications 1 à 5, dans laquelle la composition de coulis contient moins d'environ 0,1% d'agent thixotrope.

6. Capsule d'ancrage telle que définie dans l'une quelconque des revendications 1 à 5, dans laquelle la composition de coulis comprend en outre une cendre volante de classe F et/ou de la fumée de silice conforme à la norme ASTM C 1240.

7. Capsule d'ancrage telle que définie dans l'une quelconque des revendications 1 à 6, dans laquelle la composition de coulis contient environ 1 % du superplastifiant.

8. Capsule d'ancrage telle que définie dans l'une quelconque des revendications 1 à 7, comprenant en outre un agent de réduction de chrome (VI) qui est le sulfate stanneux ou le sulfate ferreux.

9. Capsule d'ancrage telle que définie dans la revendication 8, dans laquelle ledit agent de réduction de chrome (VI) est le sulfate stanneux.

10. Capsule d'ancrage telle que définie dans la revendication 8, dans laquelle ledit agent de réduction de chrome (VI) est le sulfate ferreux.

11. Capsule d'ancrage telle que définie dans l'une quelconque des revendications 1 à 10, dans laquelle le polyester est un polyester non tissé.

12. Méthode d'ancrage d'un élément de renforcement, d'un goujon ou d'éléments d'ancrage dans un trou d'un substrat, comprenant :
• l'obtention d'une capsule d'ancrage telle que définie dans l'une quelconque des revendications 1 à 11 ;
• le trempage de ladite capsule dans une solution aqueuse ;
• l'introduction de ladite capsule dans le trou ; et
• l'introduction d'un élément de renforcement, d'un goujon ou d'éléments d'ancrage dans la capsule avant que ne se produise un quelconque durcissement substantiel.

13. Méthode telle que définie dans la revendication 12, dans laquelle le rapport entre la solution aqueuse et le ciment est d'environ 0,25 à environ 0,5.

14. Méthode telle que définie dans la revendication 12, dans laquelle le rapport entre la solution aqueuse et le ciment est d'environ 0,4.
